(19) **Europäisches Patentamt European Patent Office Office européen des brevets**

(11) **EP 3 772 873 B1**

(12) **EUROPEAN PATENT SPECIFICATION**

(45) Date of publication and mention
of the grant of the patent:
**30.03.2022 Bulletin 2022/13**

(21) Application number: **20189829.3**

(22) Date of filing: **06.08.2020**

(51) International Patent Classification (IPC):
**H05B 47/11** $^{(2020.01)}$ **H05B 45/22** $^{(2020.01)}$

(52) Cooperative Patent Classification (CPC):
**H05B 47/11; H05B 45/22;** Y02B 20/40

(54) **COLOR TEMPERATURE SMOOTHING OUTPUT SYSTEM**

AUSGABESYSTEM ZUR GLÄTTUNG DER FARBTEMPERATUR

SYSTÈME DE SORTIE DE LISSAGE DE TEMPÉRATURE DE COULEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.08.2019 CN 201910735925**

(43) Date of publication of application:
**10.02.2021 Bulletin 2021/06**

(73) Proprietor: **Xiamen Leedarson Lighting Co., Ltd.
Xiamen, Fujian 361010 (CN)**

(72) Inventors:
• **CHEN, Hao-Ming**
**Xiamen, Fujian (CN)**
• **LIN, Yi-Hsiung**
**Xiamen, Fujian (CN)**

(74) Representative: **Zacco Sweden AB
P.O. Box 5581
114 85 Stockholm (SE)**

(56) References cited:
**WO-A1-2013/094009** **US-A1- 2012 050 307**
**US-B1- 9 788 399**

**Description**

TECHNICAL FIELD

The present invention relates to a color temperature smoothing output system, and more particularly, to a color temperature smoothing output system capable of gradually adjusting its ratio between low color temperature and high color temperature such that an observer's retina is substantially prevented from damaged by rapid color temperature changes.

BACKGROUND

Light adaption refers to human eyes' susceptibility to various degrees of luminance variation. For example, while a person rapidly exits a bright environment and enters a dark one, he/she will loss his/her sights for a short while and then gradually restore his/her vision, where such phenomenon is called as dark adaptation. On the contrary, when a person suddenly leaves a dark place and runs into a bright one, he/she will see nothing more than lights and then restore his/her vision on objects or environments for at least a few seconds, where such phenomenon is called as light adaptation.

Dark adaptation encompasses two basic processes, including a first variation of pupil's size and a second variation of retina's photosensitive chemical materials. From bright to dark, the pupil's diameter expands substantially from 2 millimeters to 8 millimeters, such that lights that enter human's naked eyes amplify by ten to twenty folds. Light adaptation subsides fast, and usually ends within tens of seconds. Under the sudden movement from a dark place to another bright one, the naked eyes are triggered by a strong light variation. In turn, a retina's cone cells responds immediately, such that in the beginning of the light adaptation, just a few cone cells are timely triggered, and the naked eyes become highly susceptible to light stimulation and unable to see clear contour of objects in his/her sight.

Moreover, a conventional color temperature adjustable light emitting diode (LED) lamp respectively controls two independent light sources' power. In this way, the conventional color temperature adjustable LED lamp can mix lights of different color temperatures via their power ratio for generating different color temperature. Specifically, the conventional color temperature adjustable LED lamp may adjust its color temperature by simultaneously fixing one color temperature's power and dynamically adjusting another color temperature's power, such that ambient luminance may vary significantly and rapidly, and it may damage human's retina. For example, document D1 (Pub. No.: US2012050307A1) discloses a method for controlling characteristics of an electronic device based on ambient light levels, the method includes: receiving light at an ambient light sensor of a device and measuring components, such as color components, of the visible light. The component levels may be weighted differently by factors that vary based on the intensity of the light received by the ambient light sensor. Furthermore, the brightness level of a light source in the device or color output of the device may be controlled based on the weighted component levels. Document D2 (Pub. No.: US9788399B1) discloses a system and method for minimizing the effects of a laser light flash in a cockpit area of an aircraft. At least one sensor is configured to detect a laser light flash of a predetermined color. At least one light source is mounted in the cockpit area and configured to output light of the predetermined color upon activation. Finally, a controller is coupled to the at least one sensor, the at least one light source, and a cockpit ambient light control circuit. The cockpit ambient light control circuit is configured to control an intensity output of cockpit ambient lighting. The controller is configured to activate the at least one light source and to cause the cockpit ambient light control circuit to turn off or dim the intensity output of the cockpit ambient lighting upon detection of a laser light flash of the predetermined color. Document D3 (Pub. No.: WO2013/094009A1) discloses a light-emitting device which includes: a light-emitting panel comprising a plurality of light-emitting parts that emit light having mutually different colors: a controller for generating a control command in response to an operation command: and a driver for driving each of the light-emitting parts in accordance with the control command. The controller includes: an operation detector for detecting that the operation command is a rapid change command for a rapid change in the brightness of each of the light-emitting parts: and a command unit for generating, upon the detection of a rapid change command, a control command for controlling the brightness of each of the light-emitting parts according to mutually different brightness-time-change functions so that the color temperature of the light-emitting panel changes at a speed that is different from that of the change in the brightness of each of the light-emitting parts.

SUMMARY

The present disclosure aims at disclosing a color temperature smoothing output system defined in claim 1. Preferred embodiments are defined in the dependent claims.

BRIEF DESCRIPTION OF THE DRAWINGS

FIG. 1 illustrates a color temperature smoothing output system according to one embodiment not covered by the invention.

FIG. 2 illustrates a schematic block diagram of the controller shown in FIG. 1 according to the invention.

FIG. 3 illustrates how the first noise modulator and the second noise modulator shown in FIG. 1 operate for modulating FIG. 1's the first mixed light source and the second mixed light source's power respectively according to the invention.

FIG. 4 illustrates exemplarily curves that FIG.1's the controller's recursive modulations may come out according to the invention.

DESCRIPTION OF THE EMBODIMENTS

For neutralizing the conventional color temperature adjustable LED (Light Emitting Diode) lamp's rapid color temperature adjustment that damages human's retina, the present disclosure discloses a color temperature smoothing output system. Specifically, the disclosed color temperature smoothing output system is capable of gradually adjusting its output color temperature in LED units and feedbacking its ambient luminance for aiding the gradual adjustment.

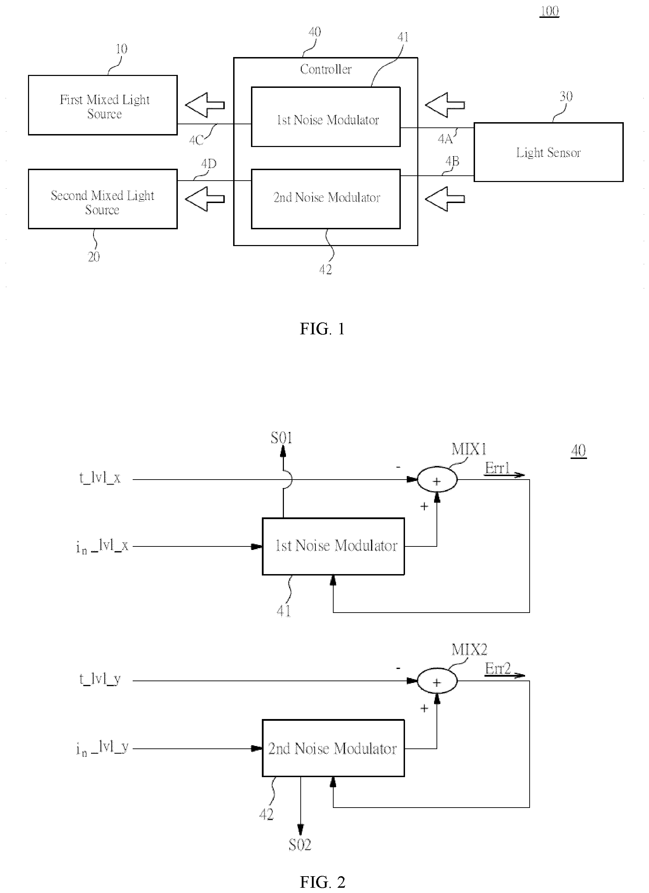

FIG. 1 illustrates a color temperature smoothing output system 100 according to one embodiment not covered by the invention. The color temperature smoothing output system 100 includes a first mixed light source 10, a second mixed light source 20, a light sensor 30, and a controller 40, which is electrically coupled to the first mixed light source 10, the second mixed light source 20 and the light sensor 30.

The first mixed light source 10 emits a first-type color temperature that may be a low color temperature, which acts as a basic luminance in light mixing. In some examples, the first-type color temperature ranges between 1700 Kelvin (°K or K) and 5000K. Also, the first mixed light source 10 may include multiple LED units, or even at least one array or plate of LED units. In some examples, the first mixed light source 10 may additionally include a driving unit that is electrically coupled to the multiple LED units, such that the driving unit can modulate the multiple LED units' power according to received control signals.

The second mixed light source 20 emits a second-type color temperature that may be a high color temperature, i.e., a cool light source. In some example, the high color temperature ranges between 5000K and 9300K. Besides, the second-type color temperature also acts as another basic luminance in light mixing. In some examples, the second mixed light source 20 includes multiple LED units, or even an array or plate of LED units. In some other examples, the second mixed light source 20 may also include a driving unit that is electrically coupled to the multiple LED units, such that the driving unit can modulate the multiple LED units' power according to received control signals.

In some examples, the color temperature smoothing output system 100 includes more than two mixed light sources, i.e., other than both the first and second mixed light sources 10 and 20, such as a warm yellow light source or a sunlight luminance source. Similarly, the color temperature smoothing output system 100's more than two light sources may be disposed on a same circuit board or plate and be segmented into different circuits.

The light sensor 30 detects its ambient luminance's color temperature, which may be a color temperature value or a three-dimensional color set (e.g., an RGB value). Also, the light sensor 30 feedbacks a primary sense signal that is then transformed into two types of values with the aid of the controller 40. Specifically, the primary sense signal includes a first modulation signal (i.e., a first sense signal) that corresponds to the first-type color temperature's proportional power within the detected ambient luminance, and includes a second modulation signal (i.e., a second sense signal) that corresponds to the second-type color temperature's proportional power within the detected ambient luminance. In some examples, the first modulation signal and the second modulation signal can be respectively designed according to the first color temperature and the second color temperature's properties and instant requirements. In some examples, the color temperature smoothing output system 100 may include multiple light sensors 30 for respectively modulating the first mixed light source 10 and the second mixed light source 20's power.

In one example, the light sensor 30 is implemented using a colorimeter that detects the first color temperature's luminance and the second color temperature's luminance and feedbacks both the detected luminance to the controller 40.

The controller 40 references the light sensor 30's sense signal via the light sensor 30's feedbacking and respectively modifies the first mixed light source 10 and the second mixed light source 20's power, until both the first mixed light source 10 and the second mixed light source 20 reach respective target values. In some examples, the controller 40 is implemented using at least one or a combination of a CPU, a programable microprocessor that is designed for general purposes or specific purposes, a DSP, an ASIC (Application Specific Integrated Circuit), and other devices having similar functions. In one example, the controller 40 can be installed in cooperation with a storage unit, or be combined with a storage unit into a SOC, such that the controller 40 is capable of permanently or semi-permanently storing partial information (e.g., a lookup table or operational parameters) and is therefore capable of pre-storing required operational parameters for future accesses.

In one example, the controller 40 includes a first input terminal 4A, a second input terminal 4B, a first output terminal 4C and a second output terminal 4D. Also, the controller 40 includes a first noise modulator 41 and a second noise modulator 42. The first noise modulator 41 is electrically coupled to the first input terminal 4A for receiving a first sense signal in_lv1_x and the first output terminal 4C for outputting a first output signal t_lv1_x. And the second noise modulator 42 is electrically coupled to the second input terminal 4B for receiving a second sense signal in_lv1_y and the second output terminal 4D for outputting a second output signal t_lv1_y.

Exemplarily, upon the condition that the color temperature smoothing output system 100 includes multiple light sensors 30, the controller 40 has more corresponding input terminals and output terminals. The first input terminal 4A is electrically coupled to the light sensor 30 for receiving a first sense signal that corresponds to the first color temperature. Similarly, the second input terminal 4B is electrically coupled to the light sensor 30 for receiving a second sense signal that corresponds to the second color temperature. Also, the first output terminal 4C is electrically coupled to the first mixed light source 10 for relaying a first modulation signal that is generated based on the first sense signal. Similarly, the second output terminal 4D is electrically coupled to the second mixed light source 20 for relaying a second modulation signal that is generated based on the second sense signal.

FIG. 2 illustrates a schematic block diagram of the controller 40 shown in FIG. 1 according to the invention. The controller 40 respectively perform color temperature modulation corresponding to the first mixed light source 10 and the second mixed light source 20 for output a target color temperature via feedbacking. Specifically, the light sensor 30 feedbacks the first sense signal that senses the first mixed light source 10's luminance, and the controller 40 in turn modulates the first mixed light source 10's color temperature using the first mixed light source 10's luminance. Similarly, the light sensor 30 feedbacks the second sense signal that senses the second mixed light source 20's luminance, and the controller 40 in turn modulates the second mixed light source 20's color temperature using the second mixed light source 20's luminance.

During the controller 40's color temperature modulation, the controller 40 compares a gradually-modulated first sense signal in-lv1_x with a first target value t-lv1_x, with n is a positive integer and gradually incremented from 1. During recursive comparisons, the controller 40 compares the first sense signal in_lv1_x with the first target value t_lv1_x and generates a first output signal S01 based on results of the recursive comparisons. When the comparison result indicates that the first sense signal in_lv1_x substantially equals the first target value t-lv1_x, the output signal S01 stops the first mixed light source 10's recursive modulation. Else, when the comparison result indicates that the first sense signal in_lv1_x differs from the first target value t_lv1_x with a first error value Err1, a mixer MIX1 feedbacks the first error value Err1 to the controller 40's first noise modulator 41. In turn, the first noise modulator 41 modulates the first sense signal in_lv1_x to generate another succeeding first sense signal i(n+1)_lv1_x, and the mixer MIX1 then compares the succeeding first sense signal i(n+1)_lv1_x with the first target value t_lv1_x in a succeeding recursion. As the mixer MIX1's recursive comparisons proceed, the first error value Err1 will be substantially close or equal to zero.

Similarly, the controller 40 also compares a gradually-modulated second sense signal in_lv1_y with a second target value t_lv1_y, with n is a positive integer and gradually incremented from 1. During recursive comparisons, the controller 40 compares the second sense signal in_lv1_y with the second target value t_lv1_y and generates a second output signal S02 based on results of the recursive comparisons. When the comparison result indicates that the second sense signal in_lv1_y substantially equals the second target value t_lv1_y, the output signal S02 stops the second mixed light source 20's recursive modulation. Else, when the comparison result indicates that the second sense signal in_lv1_y differs from the second target value t_lv1_y with a second error value Err2, a mixer MIX2 feedbacks the second error value Err2 to the controller 40's second noise modulator 42. In turn, the second noise modulator 42 modulates the second sense signal in_lv1_y to generate another succeeding second sense signal i(n+)_lv1_y, and the mixer MIX2 then compares the succeeding second sense signal i(n+1)_lv1_y with the second target value t_lv1_y in a succeeding recursion. As the mixer MIX2's recursive comparisons proceed, the second error value Err2 will be substantially close or equal to zero.

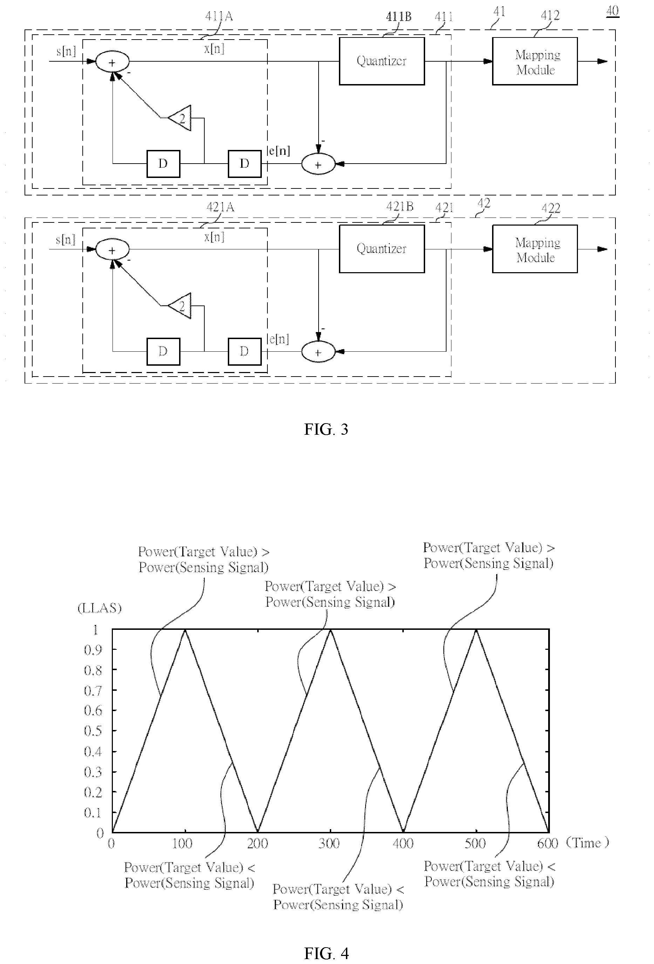

FIG. 3 illustrates how the first noise modulator 41 and the second noise modulator 42 operate for modulating the first mixed light source 10 and the second mixed light source 20's power respectively according to the invention. Also, FIG. 4 illustrates exemplarily curves that the controller 40's recursive modulations may come out according to the invention.

The first noise modulator 41 includes a bit quantization module 411 and a mapping module 412. The bit quantization module 411 determines a step-modulation signal (i.e., a codeword) according to a spread ratio between the first sense signal in_lv1_x and the first target value t_lv1_x. In addition, the bit quantization module 411's operator 411A filters low-frequency noises off the spread ratio, and the bit quantization module 411's quantizer 411B maps the filtered spread ratio into a first codeword. Moreover, the mapping module 412 outputs an adjustment level based on the first codeword, adds the adjustment level with the first sense signal in_lv1_x for modulating said first sense signal in lv1_x, and outputs the last-modulated first sense signal in lvl x (i.e., as the first output signal via the controller 40's first output terminal 4C) to the first mixed light source 10, such that the controller 40 can gradually adjust the first mixed light source 10's color temperature and luminance.

Similarly, the second noise modulator 42 includes a bit quantization module 421 and a mapping module 422. The bit quantization module 421 determines a step-modulation signal (i.e., a codeword) according to a spread ratio between the second sense signal in_lv1_y and the second target value t_lv1_y. In addition, the bit quantization module 421's operator 421A filters low-frequency noises off the spread ratio, and the bit quantization module 421's quantizer 421B maps the filtered spread ratio into a second codeword. Moreover, the mapping module 422 outputs an adjustment level based on the second codeword, adds the adjustment level with the second sense signal in_lv1_y for modulating said second sense signal in_lv1_y, and outputs the last-modulated second sense signal in_lv1_y (i.e., as the second output signal via the controller 40's second output terminal 4D) to the second mixed light source 20, such that the controller 40 can gradually adjust the second mixed light source 20's color temperature and luminance.

FIG. 4 substantially illustrates a curve associated in between the first sense signal in-lv1_x and the first target value t_lv1_x or a curve associated in between the second sense signal in_lv1_y and the second target value t_lv1_y. As shown in FIG. 4, the horizontal axis indicates time, and the vertical axis indicates the step-modulation signal's value. We'll take the association between the first sense signal in_lv1_x and the first target value t_lv1_x for example. When the first target value in lvl x is greater than the first sense signal t-lv1_x, for example, in power, the step-modulation signal is gradually rising (i.e., step-raising) from 0 to 1 during recursive modulations. On the contrary, When the first target value in_lv1_x is smaller than the first sense signal t-lv1_x, for example, in power, the step-modulation signal is gradually falling from 1 to 0 during recursive modulations (i.e., step-reducing).

The controller 40 inputs the step-modulation signal (as shown in FIG. 4) to the operators 411A and 421 A for filtering low-frequency noises off the first sense signal or the second sense signal, i.e., the operators 411A and 421A act as high-frequency band-pass filters. In some examples, the operators 411A and 421A's operations are indicated as:

$$x[n]=s[n]-2\times e[n-1]+e[n-2] \qquad (1);$$

s[n] indicates the step-modulation signal inputted at a moment n, e[n-1] indicates a delayed-by-one-stage difference of the quantizer 411B or 421B's input and output (e.g., passing the difference to one single delayer D and then multiplied by a two-fold amplifier, as shown in the operator 411A or 421A of FIG. 3). Similarly, e[n-2] indicates a delayed-by-two-stage difference of the quantizer 411B or 421B's input and output (e.g., passing the difference to two delayers D, as shown in the operator 411A or 421A of FIG. 3 ), and x[n] indicates a filter signal outputted at the moment n, i.e., the input signal of the quantizer 411B or 421B.

The quantizer 411B maps the operators 411A's filter signal for quantizing said filter signal into a corresponding first codeword. Similarly, the quantizer 421B maps the operators 421A's filter signal for quantizing said filter signal into a corresponding second codeword. The quantizer 411B or 421B's mapping function is implemented using a rounding function in some examples, such that the filter signal can be rounded to a designated length and/or decimal place.

In some examples, the rounding function is a rounding down function, a rounding up function, a rounding off function, a rounding towards zero function, or a rounding away from zero function.

In some examples, the mapping module 412 transforms the first codeword received from the quantizer 411B into a corresponding adjustment level. Similarly, the mapping module 422 transforms the second codeword received from the quantizer 421B into another corresponding adjustment level. Specifically, in some examples, the mapping module 412 or 422's transformation uses the following transformation table that transforms a codeword into a corresponding adjustment level, where $\Delta$ indicates a unit step for the abovementioned step-raising or step-reducing the adjustment level:

| Codeword | Adjustment Level |
|----------|------------------|
| 0 | $-2^{(N-1)} \times \Delta$ |
| 1 | $-(2^{(N-1)}-1) \times \Delta$ |
| 2 | $-(2^{(N-1)}-2) \times \Delta$ |
| : | : |
| $2^{(N-1)}$ | 0 |
| : | : |
| $2^N-2$ | $(2^{(N-1)}-2) \times \Delta$ |
| $2^N-1$ | $(2^{(N-1)}-1) \times \Delta$ |

As shown in FIG. 2, the determined adjustment level from the first noise modulator 41 is mixed with the first sense signal in-lv1_x for reducing the resulting error Err1 previously embedded within said first sense signal in_lv1_x. At last, the first sense signal in_lv1_x is then used for driving the first mixed light source 10, such that the first sense signal in_lv1_x will be close enough to the first target value t_lv1_x in color temperature or luminance.

Similarly, the determined adjustment level from the first noise modulator 42 is mixed with the second sense signal in_lv1_y for reducing the resulting error Err2 previously embedded within said second sense signal in_lv1_y. At last, the second sense signal in_lv1_y is then used for driving the second mixed light source 20, such that the second sense signal in_lv1_y will be close enough to the second target value t_lv1_y in color temperature or luminance

As a result, the first mixed light source 10 and the second mixed light source 20 can emit gradually-changed color temperature or luminance for substantially preventing damaging human's retina. Specifically, by referencing to ambient luminance with the aid of the light sensor 30, both the first mixed light source 10 and the second mixed light source 20 can better smooth respective color temperature in response to the ambient luminance's instant change.

**Claims**

1. A color temperature smoothing output system (100B), comprising:

   a first mixed light source (10), configured to emit a first color temperature;
   a second mixed light source (20), configured to emit a second color temperature that is higher than the first color temperature;
   a light sensor (30), configured to detect an ambient luminance that is formed by both the first color temperature and the second color temperature and generate a primary sense signal based on the detected ambient luminance; and
   a controller (40), electrically coupled to the first mixed light source (10), the second mixed light source (20) and the light sensor (30) for receiving the primary sense signal, configured to transform the primary sense signal into a first sense signal that corresponds to the first color temperature's proportional power within the ambient luminance and a second sense signal that corresponds to the second color temperature's proportional power within the ambient luminance, configured to reduce the first sense signal's difference from the first color temperature's proportional power by recursive modulations of the first sense signal and then apply the recursively modulated first sense signal to drive the first mixed light source (10), and configured to reduce the second sense signal's difference from the second color temperature's proportional power by recursive modulations of the second sense signal and then apply recursively modulated second sense signal to drive the second mixed light source (20); **characterized in that** the controller (40) further comprises:
   a first noise modulator (41), configured to receive the first sense signal for recursively modulating the first sense signal; and
   a first mixer, having a first input terminal electrically coupled to the first noise modulator (41) for receiving the recursively modulated first sense signal, having a second input terminal for receiving a first target value, and having an output terminal electrically coupled to the first noise modulator (41), wherein the first mixer is configured mix the recursively modulated first sense signal with the first target value to generate a first error signal, and configured to recursively feedback the first error signal to the first noise modulator (41) until the first error signal is small enough such that the recursively first sense signal is substantially close to the first target value;
   the controller (40) further comprises:

   a second noise modulator (42), configured to receive the second sense signal for recursively modulating the second sense signal; and
   a second mixer, having a first input terminal electrically coupled to the second noise modulator (42) for receiving the recursively modulated second sense signal, and having a second input terminal for receiving a second target value, and having an output terminal electrically coupled to the second noise modulator (42), wherein the second mixer is configured mix the recursively modulated second sense signal with the second target value to generate a second error signal, and configured to feedback the second error signal to the second noise modulator (42) until the second error signal is small enough such that the recursively modulated second sense signal is substantially close to the second target value.

2. The color temperature smoothing output system (100) of claim 1, **characterized in that**, the first color temperature ranges between 1700K and 5000K.

3. The color temperature smoothing output system (100) of claim 1, **characterized in that**, the second color temperature ranges between 5000K and 9300K.

4. The color temperature smoothing output system (100) of claim 1, **characterized in that**, the light sensor comprises a colorimeter.

5. The color temperature smoothing output system (100) of claim 1, **characterized in that**, the controller (40) comprises at least one or a combination of a CPU, a programmable microprocessor that is designed for general purposes or specific purposes, a DSP, and an ASIC.

6. The color temperature smoothing output system (100) of claim 1, **characterized in that**, the controller comprises a storage unit or is combined with the storage unit into a SoC

7. The color temperature smoothing output system (100) of claim 1, **characterized in that**, the first noise modulator (41) comprises:

   a bit quantization module (411), configured to determine a first codeword according to a spread ratio between the first sense signal or the recursively modulated first sense signal and the first target value; and

a mapping module (412), electrically coupled to the bit quantization module (411) for receiving the first codeword, and configured to generate a first adjustment level based on the first codeword;

wherein the first noise modulator (41) is further configured to mix the first adjustment level into the first sense signal or the recursively modulated first sense signal for step-adjusting the first sense signal or the recursively modulated first sense signal.

8. The color temperature smoothing output system (100) of claim 7, **characterized in that**, the mapping module (412) is further configured to step-raise the first adjustment level when the first target value is larger than the first sense signal or the recursively modulated first sense signal.

9. The color temperature smoothing output system (100) of claim 7, **characterized in that**, the mapping module (412) is further configured to step-reduce the first adjustment level when the first target value is smaller than the first sense signal or the recursively modulated first sense signal.

10. The color temperature smoothing output system (100) of claim 7, **characterized in that**, the bit quantization module (411) comprises:

a first operator (411A), configured to filter low-frequency noises off the first sense signal or the recursively modulated first sense signal to generate a first filter signal; and
a first quantizer (411B), electrically coupled to the first operator for receiving the first filter signal and configured to generate the first codeword based on the first filter signal.

11. The color temperature smoothing output system (100) of claim 10, **characterized in that**, the first operator (411A) is further configured to generate the first filter signal based on:

$$x[n]=s[n]-2\times e[n-1]+e[n-2];$$

wherein s[n] indicates the first sense signal or the recursively modulated first sense signal inputted at a moment n, e[n-1] indicates a delayed-by-one-stage difference of the first quantizer (411B)'s input and output, e[n-2] indicates a delayed-by-two-stage difference of the first quantizer (411B)'s input and output, and x[n] indicates the first filter signal outputted at the moment n.

12. The color temperature smoothing output system (100) of claim 10, **characterized in that**, the first quantizer (411B) is further configured to quantize the first filter signal into the first codeword using a rounding function.

13. The color temperature smoothing output system (100) of claim 12, **characterized in that**, the first quantizer (411B) is further configured to quantize the first filter signal into the first codeword using at least one of a rounding down function, a rounding up function, a rounding off function, a rounding towards zero function, and a rounding away from zero function.

14. The color temperature smoothing output system (100) of claim 1, **characterized in that**, the second noise modulator (42) comprises:

a bit quantization module (421), configured to determine a second codeword according to a spread ratio between the second sense signal or the recursively modulated second sense signal and the second target value; and
a mapping module (422), electrically coupled to the bit quantization module (421) for receiving the second codeword, and configured to generate a second adjustment level based on the second codeword;

wherein the second noise modulator (42) is further configured to mix the second adjustment level into the second sense signal or the recursively modulated second sense signal for step-adjusting the second sense signal or the recursively modulated second sense signal.

15. The color temperature smoothing output system (100) of claim 14, **characterized in that**, the mapping module (422) is further configured to step-raise the second adjustment level when the second target value is larger than the second sense signal or the recursively modulated second sense signal

16. The color temperature smoothing output system (100) of claim 14, **characterized in that**, the mapping module (422) is further configured to step-reduce the second adjustment level when the second target value is smaller than the second sense signal or the recursively modulated second sense signal

17. The color temperature smoothing output system (100) of claim 14, **characterized in that**, the bit quantization module (421B) comprises:

a second operator (421A), configured to filter low-frequency noises off the second sense signal or the recursively modulated second sense signal to generate a second filter signal; and
a second quantizer (421B), electrically coupled to the second operator (421A) for receiving the second filter signal and configured to generate the second codeword based on the second filter signal.

18. The color temperature smoothing output system (100) of claim 17, **characterized in that**, the second operator (421A) is further configured to generate the second filter signal based on:

$$x[n]=s[n]-2\times e[n-1]+e[n-2];$$

wherein, s[n] indicates the second sense signal or the recursively modulated second sense signal inputted at a moment n, e[n-1] indicates a delayed-by-one-stage difference of the second quantizer (421B)'s input and output, e[n-2] indicates a delayed-by-two-stage difference of the second quantizer (421B)'s input and output, and x[n] indicates the second filter signal outputted at the moment n.

**Patentansprüche**

1. Ausgabesystem (100B) zur Glättung der Farbtemperatur, umfassend:

eine erste Mischlichtquelle (10), die zur Ausgabe einer ersten Farbtemperatur ausgelegt ist; eine zweite Mischlichtquelle (20), die zur Ausgabe einer zweiten Farbtemperatur ausgelegt ist, die höher als die erste Farbtemperatur ist; einen Lichtsensor (30), der dazu ausgelegt ist, eine sowohl durch die erste Farbtemperatur als auch die zweite Farbtemperatur gebildete Umgebungshelligkeit zu erkennen, und ein primäres Erfassungssignal basierend auf der erkannten Umgebungshelligkeit zu erzeugen; und eine Steuerung (40), die mit der ersten Mischlichtquelle (10), der zweiten Mischlichtquelle (20) und dem Lichtsensor (30) zum Empfangen des primären Erfassungssignals gekoppelt ist, dazu ausgelegt, das primäre Erfassungssignal in ein erstes Erfassungssignal, das der proportionalen Leistung der ersten Farbtemperatur innerhalb der Umgebungshelligkeit entspricht, und ein zweites Erfassungssignal, das der proportionalen Leistung der zweiten Farbtemperatur innerhalb der Umgebungshelligkeit entspricht, umzuwandeln, dazu ausgelegt, die Differenz des ersten Erfassungssignals von der proportionalen Leistung der ersten Farbtemperatur durch rekursive Modulationen des ersten Erfassungssignals zu verringern, und dann das rekursiv modulierte erste Erfassungssignal zum Ansteuern der ersten Mischlichtquelle (10) anzuwenden, und dazu ausgelegt, die Differenz des zweiten Erfassungssignals von der proportionalen Leistung der zweiten Farbtemperatur durch rekursive Modulationen des zweiten Erfassungssignals zu verringern, und dann das rekursiv modulierte zweite Erfassungssignal zum Ansteuern der zweiten Mischlichtquelle (20) anzuwenden;

**dadurch gekennzeichnet, dass** die Steuerung (40) weiter umfasst:

einen ersten Rauschmodulator (41), der zum Empfangen des ersten Erfassungssignals für die rekursive Modulation des ersten Erfassungssignals ausgelegt ist; und einen ersten Mischer, der einen ersten, mit dem ersten Rauschmodulator (41) elektrisch gekoppelten Eingangsanschluss zum Empfangen des rekursiv modulierten ersten Erfassungssignals aufweist, einen zweiten Eingangsanschluss zum Empfangen eines ersten Zielwerts aufweist und einen mit dem ersten Rauschmodulator (41) elektrisch gekoppelten Ausgangsanschluss aufweist, wobei der erste Mischer zum Mischen des rekursiv modulierten ersten Erfassungssignals mit dem ersten Zielwert zur Erzeugung eines ersten Fehlersignals ausgelegt ist und zum rekursiven Rückkoppeln des ersten Fehlersignals an den ersten Rauschmodulator (41) ausgelegt ist, bis das erste Fehlersignal klein genug ist, so dass das rekursiv modulierte erste Erfassungssignal im Wesentlichen nahe am ersten Zielwert liegt; welche Steuerung (40) ferner umfasst:

einen zweiten Rauschmodulator (42), der zum Empfangen des zweiten Erfassungssignals für die rekursive Modulation des zweiten Erfassungssignals ausgelegt ist; und einen zweiten Mischer, der einen ersten, mit dem zweiten Rauschmodulator (42) elektrisch gekoppelten Eingangsanschluss zum Empfangen des rekursiv modulierten zweiten Erfassungssignals aufweist und einen zweiten Eingangsanschluss zum Empfangen eines zweiten Zielwerts aufweist und einen mit dem zweiten Rauschmodulator (42) elektrisch gekoppelten Ausgangsanschluss aufweist, wobei der zweite Mischer zum Mischen des rekursiv modulierten zweiten Erfassungssignals mit dem zweiten Zielwert zur Erzeugung eines zweiten Fehlersignals ausgelegt ist und zum Rückkoppeln des zweiten Fehlersignals an den zweiten Rauschmodulator (42) ausgelegt ist, bis das zweite Fehlersignal klein genug ist, so dass das rekursiv modulierte zweite Erfassungssignal im Wesentlichen nahe am zweiten Zielwert liegt.

2. Ausgabesystem (100) zur Glättung der Farbtemperatur nach Anspruch 1, **dadurch gekennzeichnet, dass** die erste Farbtemperatur zwischen 1700 K und 5000 K liegt.

3. Ausgabesystem (100) zur Glättung der Farbtemperatur nach Anspruch 1, **dadurch gekennzeichnet, dass** die zweite Farbtemperatur zwischen 5000 K und 9300 K liegt.

4. Ausgabesystem (100) zur Glättung der Farbtemperatur nach Anspruch 1, **dadurch gekennzeichnet, dass** der Lichtsensor ein Kolorimeter umfasst.

5. Ausgabesystem (100) zur Glättung der Farbtemperatur nach Anspruch 1, **dadurch gekennzeichnet, dass** die Steuerung (40) mindestens eine oder eine Kombination aus einer CPU, einem programmierbaren Mikroprozessor, der für allgemeine Zwecke oder bestimmte Zwecke ausgelegt ist, einem DSP und einem ASIC umfasst.

6. Ausgabesystem (100) zur Glättung der Farbtemperatur nach Anspruch 1, **dadurch gekennzeichnet, dass** die Steuerung eine Speichereinheit umfasst oder mit der Speichereinheit zu einem SoC kombiniert ist.

7. Ausgabesystem (100) zur Glättung der Farbtemperatur nach Anspruch 1, **dadurch gekennzeichnet, dass** der erste Rauschmodulator (41) umfasst:

   ein Bitquantifizierungsmodul (411), das dazu ausgelegt ist, ein erstes Codewort gemäß einem Spreizverhältnis zwischen dem ersten Erfassungssignal oder dem rekursiv modulierten ersten Erfassungssignal und dem ersten Zielwert zu bestimmen; und
   ein Zuordnungsmodul (412), das elektrisch mit dem Bitquantifizierungsmodul (411) gekoppelt ist, um das erste Codewort zu empfangen, und ausgelegt ist, um eine erste Anpassungsstufe basierend auf dem ersten Codewort zu erzeugen;
   wobei der erste Rauschmodulator (41) ferner derart ausgelegt ist, dass er die erste Anpassungsstufe in das erste Erfassungssignal oder das rekursiv modulierte erste Erfassungssignal zum schrittweisen Einstellen des ersten Erfassungssignals oder des rekursiv modulierten ersten Erfassungssignals mischt.

8. Ausgabesystem (100) zur Glättung der Farbtemperatur nach Anspruch 7, **dadurch gekennzeichnet, dass** das Zuordnungsmodul (412) ferner dazu ausgelegt ist, die erste Anpassungsstufe schrittweise zu erhöhen, wenn der erste Zielwert größer als das erste Erfassungssignal oder das rekursiv modulierte erste Erfassungssignal ist.

9. Ausgabesystem (100) zur Glättung der Farbtemperatur nach Anspruch 7, **dadurch gekennzeichnet, dass** das Zuordnungsmodul (412) ferner dazu ausgelegt ist, die erste Anpassungsstufe schrittweise zu verringern, wenn der erste Zielwert kleiner als das erste Erfassungssignal oder das rekursiv modulierte erste Erfassungssignal ist.

10. Ausgabesystem (100) zur Glättung der Farbtemperatur nach Anspruch 7, **dadurch gekennzeichnet, dass** das Bitquantifizierungsmodul (411) umfasst:

    einen ersten Betreiber (411A), der dazu ausgelegt ist, niederfrequente Räusche aus dem ersten Erfassungssignal oder dem rekursiv modulierten ersten Erfassungssignal herauszufiltern, um ein erstes Filtersignal zu erzeugen; und
    einen ersten Quantifizierer (411B), der elektrisch mit dem ersten Betreiber gekoppelt ist, um das erste Filtersignal zu empfangen, und ausgelegt ist, um das erste Codewort basierend auf dem ersten Filtersignal zu erzeugen.

11. Ausgabesystem (100) zur Glättung der Farbtemperatur nach Anspruch 10, **dadurch gekennzeichnet, dass** der erste Betreiber (411A) ferner derart ausgelegt ist, dass er das erste Filtersignal basierend auf:

$$x[n]=s[n]-2\times e[n-1]+e[n-2] \text{ erzeugt};$$

wobei s[n] das erste Erfassungssignal oder das rekursiv modulierte erste Erfassungssignal, eingegeben zu einem Zeitpunkt n, angibt, e[n-1] eine um eine Stufe verzögerte Differenz der Eingabe und Ausgabe des ersten Quantifizierers (411B) angibt, e[n -2] eine um zwei Stufen verzögerte Differenz der Eingabe und Ausgabe des ersten Quantifizierers (411B) angibt, und x[n] das zum Zeitpunkt n ausgegebene erste Filtersignal angibt.

12. Ausgabesystem (100) zur Glättung der Farbtemperatur nach Anspruch 10, **dadurch gekennzeichnet, dass** der erste Quantifizierer (411B) ferner zum Quantifizieren des ersten Filtersignals unter Verwendung einer Rundungsfunktion in das erste Codewort ausgelegt ist.

13. Ausgabesystem (100) zur Glättung der Farbtemperatur nach Anspruch 12, **dadurch gekennzeichnet, dass** der erste Quantifizierer (411B) ferner zum Quantifizieren des ersten Filtersignals in das erste Codewort unter Verwendung von mindestens einer von einer Funktion zum Abrunden nach unten, einer Aufrundungsfunktion, einer Abrundungsfunktion, einer Funktion zum Runden in Richtung Null und einer Funktion zum Runden von Null weg ausgelegt ist.

14. Ausgabesystem (100) zur Glättung der Farbtemperatur nach Anspruch 1, **dadurch gekennzeichnet, dass** der zweite erste Rauschmodulator (42) umfasst:

ein Bitquantifizierungsmodul (421), das dazu ausgelegt ist, ein zweites Codewort gemäß einem Spreizverhältnis zwischen dem zweiten Erfassungssignal oder dem rekursiv modulierten zweiten Erfassungssignal und dem zweiten Zielwert zu bestimmen; und
ein Zuordnungsmodul (422), das elektrisch mit dem Bitquantifizierungsmodul (421) gekoppelt ist, um das erste Codewort zu empfangen, und ausgelegt ist, um eine erste Anpassungsstufe basierend auf dem zweiten Codewort zu erzeugen;
wobei der zweite Rauschmodulator (42) ferner derart ausgelegt ist, dass er die zweite Anpassungsstufe in das zweite Erfassungssignal oder das rekursiv modulierte zweite Erfassungssignal zum schrittweisen Einstellen des zweiten Erfassungssignals oder des rekursiv modulierten zweiten Erfassungssignals mischt.

15. Ausgabesystem (100) zur Glättung der Farbtemperatur nach Anspruch 14, **dadurch gekennzeichnet, dass** das Zuordnungsmodul (422) ferner dazu ausgelegt ist, die zweite Anpassungsstufe schrittweise zu erhöhen, wenn der zweite Zielwert größer als das zweite Erfassungssignal oder das rekursiv modulierte zweite Erfassungssignal ist.

16. Ausgabesystem (100) zur Glättung der Farbtemperatur nach Anspruch 14, **dadurch gekennzeichnet, dass** das Zuordnungsmodul (422) ferner dazu ausgelegt ist, die zweite Anpassungsstufe schrittweise zu verringern, wenn der zweite Zielwert kleiner als das zweite Erfassungssignal oder das rekursiv modulierte zweite Erfassungssignal ist.

17. Ausgabesystem (100) zur Glättung der Farbtemperatur nach Anspruch 14, **dadurch gekennzeichnet, dass** das Bitquantifizierungsmodul (421B) umfasst:

einen zweiten Betreiber (421A), der dazu ausgelegt ist, niederfrequente Räusche aus dem zweiten Erfassungssignal oder dem rekursiv modulierten zweiten Erfassungssignal herauszufiltern, um ein zweites Filtersignal zu erzeugen; und
einen zweiten Quantifizierer (421B), der elektrisch mit dem zweiten Betreiber (421A) gekoppelt ist, um das zweite Filtersignal zu empfangen, und ausgelegt ist, um das zweite Codewort basierend auf dem zweiten Filtersignal zu erzeugen.

18. Ausgabesystem (100) zur Glättung der Farbtemperatur nach Anspruch 17, **dadurch gekennzeichnet, dass** der zweite Betreiber (421A) ferner derart ausgelegt ist, dass er das zweite Filtersignal basierend auf:

$$x[n]=s[n]-2×e[n-1]+e[n-2] \text{ erzeugt;}$$

wobei s[n] das zweite Erfassungssignal oder das rekursiv modulierte zweite Erfassungssignal, eingegeben zu einem Zeitpunkt n, angibt, e[n-1] eine um eine Stufe verzögerte Differenz der Eingabe und Ausgabe des zweiten Quantifizierers (421B) angibt, e[n -2] eine um zwei Stufen verzögerte Differenz der Eingabe und Ausgabe des zweiten Quantifizierers (421B) angibt, und x[n] das zum Zeitpunkt n ausgegebene zweite Filtersignal angibt.

**Revendications**

1. Système de sortie de lissage de température de couleur (100B), comprenant :

une première source lumineuse mixte (10) configurée pour émettre une première température de couleur ;
une deuxième source lumineuse mixte (20) configurée pour émettre une deuxième température de couleur supérieure à la première température de couleur ;
un capteur de lumière (30) configuré pour détecter une luminance ambiante qui est formée à la fois par la première température de couleur et la deuxième température de couleur et générer un signal de détection primaire basé sur la luminance ambiante détectée ; et
un contrôleur (40) couplé électriquement à la première source de lumière mixte (10), à la deuxième source de lumière mixte (20) et au capteur de lumière (30) pour recevoir le signal de détection primaire,
configuré pour transformer le signal de détection primaire en un premier signal de détection qui correspond à la puissance proportionnelle de la première température de couleur dans la luminance ambiante et un deuxième signal de détection qui correspond à la puissance proportionnelle de la deuxième température de couleur dans la luminance ambiante,

configuré pour réduire la différence entre le premier signal de détection et la puissance proportionnelle de la première température de couleur par des modulations récursives du premier signal de détection, et puis appliquer le premier signal de détection modulé de manière récursive pour piloter la première source de lumière mixte (10),

et configuré pour réduire la différence entre le deuxième signal de détection et la puissance proportionnelle de la deuxième température de couleur par des modulations récursives du deuxième signal de détection, et puis appliquer le deuxième signal de détection modulé de manière récursive pour piloter la deuxième source de lumière mixte (20),

**caractérisé en ce que** le contrôleur (40) en outre comprend :

     un premier modulateur de bruit (41) configuré pour recevoir le premier signal de détection pour moduler de manière récursive le premier signal de détection ; et

     un premier mélangeur, ayant une première borne d'entrée couplée électriquement au premier modulateur de bruit (41) pour recevoir le premier signal de détection modulé de manière récursive, ayant une deuxième borne d'entrée pour recevoir une première valeur cible, et ayant une borne de sortie couplée électriquement au premier modulateur de bruit (41),

     dans lequel le premier mélangeur est configuré pour mélanger le premier signal de détection modulé de manière récursive avec la première valeur cible pour générer un premier signal d'erreur, et configuré pour la rétroaction récursive du premier signal d'erreur au premier modulateur de bruit (41) jusqu'à ce que le premier signal d'erreur soit suffisamment petit pour que le premier signal modulé de manière récursive soit essentiellement proche de la première valeur cible ;

     le contrôleur (40) en outre comprend :

     un deuxième modulateur de bruit (42) configuré pour recevoir le deuxième signal de détection pour moduler de manière récursive le deuxième signal de détection ; et

     un deuxième mélangeur, ayant une première borne d'entrée couplée électriquement au deuxième modulateur de bruit (42) pour recevoir le deuxième signal de détection modulé de manière récursive, et ayant une deuxième borne d'entrée pour recevoir une deuxième valeur cible, et ayant une borne de sortie couplée électriquement au deuxième modulateur de bruit (42),

     dans lequel le deuxième mélangeur est configuré pour mélanger le deuxième signal de détection modulé de manière récursive avec la deuxième valeur cible pour générer un deuxième signal d'erreur, et configuré pour la rétroaction récursive du deuxième signal d'erreur au deuxième modulateur de bruit (42) jusqu'à ce que le deuxième signal d'erreur soit suffisamment petit pour que le deuxième signal modulé de manière récursive soit essentiellement proche de la deuxième valeur cible.

2. Système de sortie de lissage de température de couleur (100) selon la revendication 1, **caractérisé en ce que** la première température de couleur est comprise entre 1700K et 5000K.

3. Système de sortie de lissage de température de couleur (100) selon la revendication 1, **caractérisé en ce que** la deuxième température de couleur est comprise entre 5000K et 9300K.

4. Système de sortie de lissage de température de couleur (100) selon la revendication 1, **caractérisé en ce que** le capteur de lumière comprend un colorimètre.

5. Système de sortie de lissage de température de couleur (100) selon la revendication 1, **caractérisé en ce que** le contrôleur (40) comprend au moins l'une ou une combinaison d'une CPU, d'un microprocesseur programmable qui est conçu à des fins générales ou à des fins spécifiques, d'un DSP et d'un ASIC.

6. Système de sortie de lissage de température de couleur (100) selon la revendication 1, **caractérisé en ce que** le contrôleur comprend une unité de stockage ou est combiné avec l'unité de stockage dans un SoC.

7. Système de sortie de lissage de température de couleur (100) selon la revendication 1, **caractérisé en ce que** le premier modulateur de bruit (41) comprend :

     un module de quantification de bits (411) configuré pour déterminer un premier mot de code selon un rapport d'étalement entre le premier signal de détection ou le premier signal de détection modulé de manière récursive et la première valeur cible ; et

un module de mappage (412) couplé électriquement au module de quantification de bits (411) pour recevoir le premier mot de code, et configuré pour générer un premier niveau d'ajustement basé sur le premier mot de code ;

dans lequel le premier modulateur de bruit (41) est en outre configuré pour mélanger le premier niveau d'ajustement dans le premier signal de détection ou le premier signal de détection modulé de manière récursive pour ajuster par étapes le premier signal de détection ou le premier signal de détection modulé de manière récursive.

8. Système de sortie de lissage de température de couleur (100) selon la revendication 7, **caractérisé en ce que** le module de mappage (412) est en outre configuré pour augmenter par étapes le premier niveau de réglage lorsque la première valeur cible est supérieure au premier signal de détection ou au premier signal de détection modulé de manière récursive.

9. Système de sortie de lissage de température de couleur (100) selon la revendication 7, **caractérisé en ce que** le module de mappage (412) est en outre configuré pour réduire par étapes le premier niveau de réglage lorsque la première valeur cible est inférieure au premier signal de détection ou au premier signal de détection modulé de manière récursive.

10. Système de sortie de lissage de température de couleur (100) selon la revendication 7, **caractérisé en ce que** le module de quantification de bits (411) comprend :

un premier opérateur (411A) configuré pour filtrer les bruits basse fréquence du premier signal de détection ou du premier signal de détection modulé de manière récursive pour générer un premier signal de filtre ; et
un premier quantificateur (411B) couplé électriquement au premier opérateur pour recevoir le premier signal de filtre et configuré pour générer le premier mot de code sur la base du premier signal de filtre.

11. Système de sortie de lissage de température de couleur (100) selon la revendication 10, **caractérisé en ce que** le premier opérateur (411A) est en outre configuré pour générer le premier signal de filtre sur la base de :

$$x[n]=s[n]-2\times e[n-1]+e[n-2] \; ;$$

où s[n] indique le premier signal de détection ou le premier signal de détection modulé de manière récursive entré à un instant n, e[n-1] indique une différence retardée d'un étage de l'entrée et de la sortie du premier quantificateur (411B), e[n -2] indique une différence retardée de deux étages de l'entrée et de la sortie du premier quantificateur (411B), et x[n] indique le premier signal de filtre émis à l'instant n.

12. Système de sortie de lissage de température de couleur (100) selon la revendication 10, **caractérisé en ce que** le premier quantificateur (411B) est en outre configuré pour quantifier le premier signal de filtre dans le premier mot de code en utilisant une fonction d'arrondi.

13. Système de sortie de lissage de température de couleur (100) selon la revendication 12, **caractérisé en ce que** le premier quantificateur (411B) est en outre configuré pour quantifier le premier signal de filtre dans le premier mot de code en utilisant au moins l'une d'une fonction d'arrondi vers le bas, une fonction d'arrondi vers le haut, une fonction d'arrondi, une fonction d'arrondi vers zéro et une fonction d'arrondi à l'écart de zéro.

14. Système de sortie de lissage de température de couleur (100) selon la revendication 1, **caractérisé en ce que** le deuxième modulateur de bruit (42) comprend :

un module de quantification de bits (421) configuré pour déterminer un deuxième mot de code selon un rapport d'étalement entre le deuxième signal de détection ou le deuxième signal de détection modulé de manière récursive et la deuxième valeur cible ; et
un module de mappage (422) couplé électriquement au module de quantification de bits (421) pour recevoir le deuxième mot de code, et configuré pour générer un deuxième niveau d'ajustement basé sur le deuxième mot de code ;
dans lequel le deuxième modulateur de bruit (42) est en outre configuré pour mélanger le deuxième niveau d'ajustement dans le deuxième signal de détection ou le deuxième signal de détection modulé de manière récursive pour ajuster par étapes le deuxième signal de détection ou le deuxième signal de détection modulé de manière récursive.

15. Système de sortie de lissage de température de couleur (100) selon la revendication 14, **caractérisé en ce que** le module de mappage (422) est en outre configuré pour augmenter par étapes le deuxième niveau de réglage lorsque la deuxième valeur cible est supérieure au deuxième signal de détection ou au deuxième signal de détection modulé de manière récursive.

**16.** Système de sortie de lissage de température de couleur (100) selon la revendication 14, **caractérisé en ce que** le module de mappage (422) est en outre configuré pour réduire par étapes le deuxième niveau de réglage lorsque la deuxième valeur cible est inférieure au deuxième signal de détection ou au deuxième signal de détection modulé de manière récursive.

**17.** Système de sortie de lissage de température de couleur (100) selon la revendication 14, **caractérisé en ce que** le module de quantification de bits (421B) comprend :

un deuxième opérateur (421A) configuré pour filtrer les bruits basse fréquence du deuxième signal de détection ou du deuxième signal de détection modulé de manière récursive pour générer un deuxième signal de filtre ; et
un deuxième quantificateur (421B) couplé électriquement au deuxième opérateur (421A) pour recevoir le deuxième signal de filtre et configuré pour générer le deuxième mot de code sur la base du deuxième signal de filtre.

**18.** Système de sortie de lissage de température de couleur (100) selon la revendication 17, **caractérisé en ce que** le deuxième opérateur (421A) est en outre configuré pour générer le deuxième signal de filtre sur la base de :

$$x[n]=s[n]-2\times e[n-1]+e[n-2] \; ;$$

où s[n] indique le deuxième signal de détection ou le deuxième signal de détection modulé de manière récursive entré à un instant n, e[n-1] indique une différence retardée d'un étage de l'entrée et de la sortie du deuxième quantificateur (421B), e[n -2] indique une différence retardée de deux étages de l'entrée et de la sortie du deuxième quantificateur (421B), et x[n] indique le deuxième signal de filtre émis à l'instant n.

100

40    41

Controller

10

First Mixed Light
Source

⇐    1st Noise Modulator    ⇐

30

4C    4A

4D    4B

Light Sensor

Second Mixed Light
Source

⇐    2nd Noise Modulator    ⇐

20    42

FIG. 1

S01

40

t_lvl_x    ─────────────    MIX1    Err1

−
+

iₙ_lvl_x    ──────→    1st Noise Modulator

+

41

MIX2    Err2

t_lvl_y    ─────────────

−
+

iₙ_lvl_y    ──────→    2nd Noise Modulator

+

42

S02

FIG. 2

FIG. 3

FIG. 4

## REFERENCES CITED IN THE DESCRIPTION

**Patent documents cited in the description**

- US 2012050307 A1
- US 9788399 B1
- WO 2013094009 A1